# EUROPÄISCHE PATENTSCHRIFT

(11) **EP 2 937 677 B1**
(45) Veröffentlichungstag und Bekanntmachung des Hinweises auf die Patenterteilung: **27.02.2019**
(21) Anmeldenummer: 14166110.8
(22) Anmeldetag: 25.04.2014
(51) Int. Cl.: G01K 11/26, G01K 13/02

(54) **Temperaturmessvorrichtung**
Temperature measuring device
Dispositif de mesure de température

(43) Veröffentlichungstag der Anmeldung: 28.10.2015
(73) Patentinhaber: KIMA Echtzeitsysteme GmbH, 52428 Jülich (DE)
(72) Erfinder: Kalkert, Peter, 52428 Jülich (DE)
(74) Vertreter: Daas, Manfred Martin

(56) Entgegenhaltungen:
- GB-A- 1 166 179
- US-A- 3 769 839
- US-A- 4 743 752

## Beschreibung

### Gebiet der Erfindung

Die Erfindung bezieht sich auf eine Temperaturmessvorrichtung für Gastemperaturen sowie auf mögliche Verwendung dieser Temperaturmessvorrichtung und auf ein entsprechendes Verfahren zum Bestimmen von Gastemperaturen.

### Hintergrund der Erfindung

Die genaue Kenntnis der Temperatur eines Gases ist für viele technische Prozesse und Verfahrensabläufe von hohem Interesse, beispielsweise bei Verbrennungs- oder Umwandlungsprozessen. Die Gastemperatur ist dabei oftmals entscheidend für die Qualität der Prozessführung oder den erzielten Wirkungsgrad. Ein weit verbreitetes Verfahren zur Messung der Temperatur eines Gases besteht darin, ein klassisches Thermoelement oder einen Thermowiderstand mit dem zu messenden Gas in Kontakt und in ein thermisches Gleichgewicht zu bringen. Die Gastemperatur würde dann der Temperatur des Thermoelement oder des Thermowiderstands entsprechen. Dieses Verfahren hat den Nachteil, dass zum einen das Erreichen eines thermischen Gleichgewichts des voranstehenden Sensors mit der Umgebung einige Zeit in Anspruch nimmt und daher bei zeitlich variierenden Gastemperaturen lediglich ein zeitliches Mittel der Temperatur bestimmt werden kann. Außerdem ist der Temperatursensor bei der Anwesenheit von sehr heißen Zonen oder offenen Flammen im Messraum zusätzlich zur Gastemperatur der Strahlungswärme der sehr heißen Zonen oder offenen Flammen ausgesetzt, was die Temperaturmessung zu höheren Temperaturen verfälscht. In solchen Anlagen wird ein solcher Temperatursensor meist zum Schutz vor mechanischen Beschädigungen durch massive Gehäuse gekapselt. Das schützt einerseits zwar den Sensor, andererseits verhindert es die direkte Temperaturmessung, so dass für eine Wertung der im Inneren des Gehäuses bestimmten Temperaturdaten erst die Wärmeisolierung des Gehäuses, die dadurch hervorgerufene Verzögerungszeit und der anzuwendende Korrekturfaktor zur eigentlichen Gastemperatur bestimmt werden muss. Dies macht die Temperaturmessung zusätzlich ungenau und verlängert die Wartezeiten zur Erreichung eines thermischen Gleichgewichts vor Durchführung der indirekten Messung deutlich. Es wäre daher wünschenswert, wenn man schnellere und genauere Messverfahren zur Bestimmung der Gastemperatur zur Verfügung hätte. Genauere Verfahren wären beispielsweise Spektroskopieverfahren, die eine direkte Messung von Gastemperaturen ermöglichen. Allerdings wären diese mit ganz erheblichem apparativen Aufwand verbunden und sind in den meisten Fällen nur im Labormaßstab einsetzbar.

DE 698 35 748 T2 offenbart daher ein akustisches Pyrometer, mit dem sich die Gastemperatur direkt und mit reduziertem Aufwand messen lässt. Bei einem akustischen Pyrometer sendet ein Generator ein definiertes akustisches Signal durch den mit dem zu messenden Gas gefüllten Raum, das auf der gegenüberliegenden Seite des Raums von einem entsprechend positionierten Empfänger aufgenommen wird. Für ein bekanntes Gas kann aus der Laufzeit des akustischen Signals zwischen Sender (Sendezeitpunkt durch die Ansteuerung des Senders vorgegeben) und Empfänger (Ankunftszeit des Signals wird gemessen) die Schallgeschwindigkeit und daraus die Temperatur des Gases bestimmt werden. Vorteilhaft ist hier, dass die elektronischen Komponenten des Messsystems wie Sender und Empfänger außerhalb der heißen Zone des Gases angeordnet und gegebenenfalls gekühlt werden können. Nachteilig ist allerdings, dass die Schallgeschwindigkeit nur als Mittelwert über die gesamte Messstrecke hinweg gemessen werden kann. Beispielsweise können kalte Bereiche auf der Strecke zwischen Sender und Empfänger und dazwischen befindliche eventuell sehr heiße Bereiche eine mittlere Gastemperatur ergeben, die nirgendwo auf der Messstrecke tatsächlich vorliegt. Insofern liefern solche Messungen nur eine grobe Charakterisierung der tatsächlichen Verhältnisse als Mittelwert. Für manche Prozesse sind aber gerade eine Temperaturverteilung und lokal vorhandene Temperaturen entscheidend. Es wäre daher wünschenswert, eine Vorrichtung und ein Verfahren zur Verfügung zu haben, mit denen sich eine Gastemperatur direkt, lokal, präzise und reproduzierbar messen lässt. Es wäre außerdem wünschenswert, wenn die Vorrichtung robust ausgeführt ist und eine lange Gerätelebensdauer besitzt.

US3769839 offenbart eine Temperaturmessvorrichtung zur Bestimmung von lokalen Temperaturen in einem Gas.

### Zusammenfassung der Erfindung

Es ist eine Aufgabe der vorliegenden Erfindung, eine robuste Vorrichtung und ein entsprechend robustes Verfahren zur Messung von Gastemperaturen zur Verfügung zu stellen, womit sich eine Gastemperatur direkt, lokal, präzise und reproduzierbar messen lässt und die Vorrichtung eine lange Lebensdauer besitzt.

Diese Aufgabe wird gelöst durch eine Temperaturmessvorrichtung gemäß Anspruch 1.

Als stehende Welle wird hier eine akustische Schwingung bezeichnet, deren Knotenpunkte an den Grenzen des Resonanzvolumens liegen, wobei der Resonanzraum das Resonanzvolumen umfasst und je nach Ausführungsform und Anordnung des akustischen Resonators eine Länge besitzt, die gleich der Resonanzlänge oder größer als die Resonanzlänge ist. Bei einer longitudinalen Resonanz wie in dem erfindungsgemäßen Messfühler entspricht die Resonanzlänge der Länge der Gassäule, die in Resonanz im Resonanzvolumen schwingt. Somit definiert die Resonanzlänge die Wellenlängen der Wellen, die als stehende Wellen im Messfühler auftreten können, wobei die stehende Welle mit der größten möglichen Wellenlänge eine Wellenlänge besitzt, die das Doppelte der Resonanzlänge ist. Die Resonanzlänge wird durch die geometrischen Formen des akustischen Resonators und des Resonanzvolumens bestimmt. Die möglichen Wellenlängen λₙ einer im Messfühler in Resonanz schwingenden Gassäule mit der effektiven Resonanzlänge LR sind durch die Gleichung n * λₙ/2 = LR mit n = 1, 2, 3, ... (ganzzahlige Vielfach der halben Wellenlänge erster Ordnung) gegeben. Die Frequenz der stehenden Wellen ergibt sich aus den tatsächlichen Wellenlängen der stehenden Wellen und der Schallgeschwindigkeit C im Gas im Messfühler als fₙ = C / λₙ = n * C/(2 * LR). Die Schallgeschwindigkeit C in Gasen ist über weite Grenzen nur von der Temperatur, aber nicht vom Druck des Gases abhängig. Die Schallgeschwindigkeit ergibt sich daher aus C = (IE * Rᵢ * T)^{0,5} mit IE als Isentropenexponent, der beispielsweise für Luft den Wert 1,402 besitzt, Rᵢ als spezielle Gaskonstante, die beispielsweise für Luft den Wert 287 besitzt, und mit T als die zu bestimmende Gastemperatur in Kelvin. Somit ergibt sich die Gastemperatur aus dem Quadrat der Frequenz, die durch den Frequenzaufnehmer aufgenommen wird und entsprechend der obigen Gleichungen in der Auswerteeinheit für das jeweilige Gas mit IE und Rᵢ berechnet wird.

Die stehende Welle wird dabei in dem Resonanzraum dadurch angeregt, dass ein Störkörper als akustischer Resonator in dem Resonanzraum angeordnet ist, um vom Gasstrom durch den Messfühler hindurch umströmt oder überströmt zu werden und so ein Anschwingen der Gassäule bewirkt, was zu der stehenden akustischen Welle im Resonanzraums mit einer durch die geometrische Form des akustischen Resonators und des Resonanzraums mit einer dadurch bestimmten effektiven Resonanzlänge führt. Ein geeigneter akustischer Resonator ist beispielsweise eine Pfeife oder ein offenes Rohr. Die entsprechende Frequenz der stehenden Welle kann im Resonanzraum oder außerhalb des Resonanzraums gemessen (aufgezeichnet) werden. Somit kann die Temperatur von Gasen durch Messung von akustischen Resonanzen im Messfühler bestimmt werden, wobei die erfindungsgemäße Temperaturmessvorrichtung nicht auf bestimmte Strukturen oder Formen des Resonanzraums und/oder des akustischen Resonators beschränkt ist. Die Form des Resonanzraums und des akustischen Resonators können aber so gewählt sein, dass die Frequenzen der angeregten stehenden Wellen in einem für die präzise Messung günstigen Bereich liegen, beispielsweise außerhalb eines Bereichs, in dem anlagenbedingt ein hoher Geräuschpegel um den Messfühler herum existiert. Der Resonanzraum kann dafür in Querschnitt und Länge unterschiedlich ausgestaltet sein, vorzugsweise besitzt der Resonanzraum eine Zylinderform, damit die stehende Welle senkrecht zur Ausbreitungsrichtung symmetrische Rahmenbedingungen hat.

Die Anregung der stehenden Welle bedingt einen Gasstrom durch den Messfühler, insbesondere durch den Resonanzraum hindurch. Dieser Gasstrom kann einerseits durch das zu messende Gas selbst bewirkt werden oder kann durch geeignete Mittel in der Temperaturmessvorrichtung erzeugt werden, indem das zu messende Gas mittels einer geeigneten Einheit durch den Resonanzraum hindurch gesaugt wird. Diese Saugeinheit kann jede dafür geeignete Saugeinheit sein, beispielsweise eine Pumpe oder eine andere, einen Unterdruck an der Gaseinlassöffnung gegenüberliegenden Ende der Temperaturmessvorrichtung erzeugende Einheit.

Der Messfühler kann dabei jede für die Temperaturmessung geeignete Form aufweisen. Für die Positionierung an einer bestimmten Position im zu messenden Gas bei gleichzeitiger möglichst geringer Störung des Gases ist der Messfühler vorzugsweise ein stabförmiger Messfühler. Der Begriff "stabförmig" bezeichnet hierbei alle Formen, bei denen die Länge des Messfühlers in Richtung des Gasstroms durch den Messfühler hindurch deutlich größer ist (beispielsweise eine Größenordnung oder mehr) als die Breite des Messfühlers senkrecht zur Richtung des Gasstroms durch den Messfühler hindurch. Somit kann beispielsweise der Messfühler angeordnet in einem langen, dünnen Rohr durch ein Gasvolumen hindurch beispielsweise in einem Verbrennungsofen an einer gewünschten Position positioniert werden, ohne dass dafür besondere Maßnahmen oder Mittel im Verbrennungsofen angeordnet werden müssen. Der stabförmige Messfühler muss lediglich durch ein Loch in der Wand des Verbrennungsofens hindurch in das zu messende Gas geschoben und an der gewünschten Position gehalten werden.

Die Fühlerspitze bezeichnet das zwischen Resonanzraum und Gaseinlassöffnung befindliche vordere Teil des Messfühlers. Die Fühlerspitze braucht nicht notwendigerweise als Spitze ausgeformt zu sein. Die Fühlerspitze kann jede Form besitzen, die geeignet ist, eine Gaseinlassöffnung zu beherbergen. Die Fühlerspitze kann beispielsweise ein scheibenförmiges geschlossenes Deckelsegment eines zylinderförmigen Messfühlers sein. Die Gaseinlassöffnung selber kann dabei unterschiedlich ausgestaltet sein. Querschnittsform und Querschnittsfläche der Fühlerspitze können je nach Anpassung kreisrund oder eine andere Form besitzen, eine kleine Querschnittsfläche oder eine die Fühlerspitze nahezu ausfüllende Querschnittsfläche besitzen. Der Verlauf der Gaseinlassöffnung in der Fühlerspitze kann als gerade Öffnung in den Resonanzraum hinein verlaufen oder Kurven zur Verhinderung des Hereintragens von Ruß oder anderen Schmutzpartikel in den Resonanzraum aufweisen.

Die Gaseinlassöffnung kann im Rahmen der vorliegenden Erfindung ebenfalls in Form, Größe und Verlauf unterschiedlich ausgestaltet sein. Zumindest muss die Form und Größe der Gaseinlassöffnung zu gewählt sein, dass der Resonanzraum in Richtung des Gasstroms eine durch die Lage und Form der Gasaustrittsöffnung definierte begrenzte Länge besitzt.

Die Temperaturmessvorrichtung kann für jedes beliebige Gas verwendet werden. Allerdings muss für die Berechnung der absoluten Gastemperatur die Gaszusammensetzung bekannt sein. Ist die Gaszusammensetzung nicht bekannt, müsste die Temperaturmessung zumindest mit einer unabhängig gemessenen Referenztemperatur abgeglichen werden, vorausgesetzt, die Gaszusammensetzung bleibt für die anschließenden Temperaturmessungen im Wesentlichen konstant. Über einen solchen Abgleich könnten IE und Rᵢ empirisch bestimmt werden, so dass für andere Temperaturen die Gastemperatur aus der Frequenz berechnet werden kann.

In einer Ausführungsform ist der akustische Resonator als Pfeife ausgebildet. Die Pfeife gemäß der vorliegenden Erfindung bezeichnet nicht die gesamte Vorrichtung um die stehende Welle herum, sondern nur das tonerzeugende Element in dem Bereich (Resonanzvolumen), in dem die Gassäule eine stehende Schwingung ausbildet. Eine Pfeife ist hierbei der Tonerzeuger, bei dem der Gasstrom auf eine Kante (auch Schneidkante genannt) als Teil der Pfeife trifft, und der im weiteren Verlauf den Resonanzraum im der Gaseinlassöffnung zugewandten Teil merklich verengt. Die Elastizität des Gases im Resonanzraum bewirkt, dass der Gasstrom aus dem Resonanzvolumen um die Pfeife herum heraus und wieder hineinschwingt. Physikalisch gesprochen werden durch Turbulenzen an der Kante im Resonanzvolumen stehende Wellen erzeugt, die einen Ton mit einer von der Resonanzlänge des Resonanzvolumens abhängigen Frequenz bilden. Dieser Effekt tritt für Gase jeglicher Zusammensetzung auf. Der gezielte Gasstrahl auf die Schneidkante wird meist durch einen Kanal beginnend mit der Gaseinlassöffnung gebildet. Er trifft auf die Kante, auch Schneidekante oder Anblaskante genannt. Das Resonanzvolumen kann durch ein beispielsweise zylinderförmiges Rohr oder einen vergleichbaren länglichen Körper um den akustischen Resonator herum gebildet werden. In der erfindungsgemäßen Temperaturvorrichtung bildet der offene Resonanzraum eine offene Pfeife. Dadurch klingen die erzeugten Töne höher als beispielsweise bei einem Resonanzraum mit geschlossenem der Pfeife gegenüberliegendem Ende. Der Resonanzraum kann allerdings auch kugelförmig oder eiförmig oder auf sonstige Weise ein kompakter Körper sein. Die Frequenz und Klangfarbe des mittels Pfeife erzeugten Tons hängen vor allem von Größe und Form des Resonanzraumes ab, daneben aber auch von der Schärfe der Schneidekante und von Winkel, Dicke und Stärke des Gasstrahls auf die Schneidkante. Ein solcher Resonator definiert über seine geometrische Ausgestaltung präzise die Frequenz der stehenden Wellen und ist auf einfache Weise herstellbar.

In einer Ausführungsform ist der akustische Resonator als Wellenleiter mit gewelltem Profil ausgebildet. Hierbei besitzt der Resonanzraum an der Wandung parallel zur Richtung des Gasstroms im Messfühler eine regelmäßige Struktur an der dem Gasstrom zugewandten Oberfläche. Diese Strukturen können Wellblechform oder eine gezackte Form besitzen. Die Periodizität der Struktur die Entfernung zwischen benachbarten Tälern oder Höhen (oder Spitzen) ist für die Erzeugung der stehenden Welle wesentlich. Ein solcher Resonator ist robust und verkleinert nicht merklich den Querschnitt des Resonanzraums, da er an der Wand des Resonanzraums und nicht, wie beispielsweise eine Pfeife, in Mitten des Gasstroms angeordnet ist. Somit ist dieser akustische Resonator weniger anfällig gegen Verschmutzung.

In einer Ausführungsform ist der akustische Resonator so ausgestaltet, dass bei den zu messenden Gastemperaturen die stehende Welle in einem Frequenzbereich liegt, der mit einem Mikrofon als akustischer Frequenzaufnehmer aufgezeichnet werden kann. Damit lassen sich die Temperaturmessungen besonders zuverlässig und durch die Verwendung eines Mikrofons mit wenig apparativem Aufwand durchführen. Es kann dafür jedes bekannte geeignete handelsübliche Mikrofon verwendet werden, das bezüglich der Messbedingungen hinreichend robust, temperaturstabil und empfindlich genug ist. Bei Resonatoren in Form einer Pfeife können diese zwischen einigen Millimetern bis zu Zentimetern lang sein, wobei der Winkel der Schneidkante bei ca. 20° C liegen kann. In anderen Anwendungen kann der Winkel auch anders gewählt werden. In einer bevorzugten Ausführungsform liegt der Frequenzbereich der stehenden Welle in einem Frequenzbereich, in dem die Störgeräusche, die vom Prozess hervorgerufen werden, niedrig sind. Ein solcher Frequenzbereich der Temperaturmessvorrichtung, der außerhalb der Frequenzbereiche liegt, in denen ein hoher akustischer Geräuschpegel vorliegt, ermöglicht eine präzise Aufzeichnung (Messung) der Frequenz der akustischen stehenden Welle selbst bei niedriger Intensität der Frequenz. Somit lassen sich Temperaturmessungen auch bei geringen Gasströmen, beispielsweise bei Gasströmen, die nur durch das Gas selber verursacht werden, präzise und zuverlässig durchführen.

In einer Ausführungsform ist das Mikrofon in Richtung des Gasstroms gesehen hinter der Gasauslassöffnung angeordnet. Somit ist es nicht dem unmittelbaren Kontakt mit den eventuell heißen Gasen an der Fühlerspitze ausgesetzt. In einer bevorzugten Ausführungsform ist das Mikrofon zusätzlich außerhalb des Gasstroms ohne direkten Kontakt zum Gas angeordnet. Damit können Mikrofone verwendet werden, die weniger robust gegen Temperaturen der Gase oder chemische Reaktionen mit den Gasen sein müssen

In einer Ausführungsform umfasst die Temperaturmessvorrichtung des Weiteren eine mit der Gasauslassöffnung verbundene Saugeinheit zur Erzeugung des Gasstroms durch den Messfühler. Dadurch wird die Tonerzeugung unabhängig von einem durch das Gas selbst bereitgestellten Gasstrom. Der für die Anregung der stehenden Welle mittels akustischen Resonators benötigte Gasstrom wird durch die Temperaturmessvorrichtung selber erzeugt. Insofern kann der Messfühler mit einer beliebigen Orientierung an der Messposition positioniert werden, ohne dass seine Ausrichtung einen Einfluss auf dem Gasstrom durch den Messfühler hindurch hat. Hiermit können auch Gastemperaturen in Gasen gemessen werden, die selbst nicht strömen. Die Intensität der Frequenz der stehenden Welle ist somit unabhängig von Strömungsverhältnissen im den Messfühler umgebenden Gas außerhalb des Messfühlers. Insbesondere in Anlagen mit hohem Geräuschpegel kann die Intensität der aufzuzeichnenden Frequenz durch den Betrieb und die Einstellung der Saugeinrichtung so verstärkt werden, dass die Frequenz der stehenden Welle trotz umgebenden Geräuschen selbst bei hohem Geräuschpegel noch sehr präzise und reproduzierbar gemessen werden kann. Für eine leichtere apparative Handhabbarkeit und eine genauere Einstellung der Stärke des gewünschten Gasstroms ist die Saugeinrichtung in einer bevorzugten Ausführungsform in Richtung des Gasstroms gesehen direkt hinter der Gasauslassöffnung angeordnet.

In der Erfindung umfasst die Saugeinheit eine Venturidüse. Eine Venturidüse ist eine Auslassöffnung für einen Gasstrom, die sich im Querschnitt zur Öffnung hin gegenüber dem Querschnitt der Gasleitung davor deutlich verjüngt. Fließt durch die Venturidüse ein gasförmiges Medium, so ist an der engsten Stelle des Rohres der dynamische Druck (Staudruck) maximal und der statische Druck minimal. Die Geschwindigkeit des strömenden Gases steigt dabei im Verhältnis der Querschnitte beim Durchströmen des verjüngten (eingeschnürten) Teils an, weil überall durch die Gasleitungen dieselbe Menge durchfließt. Gleichzeitig sinkt der Druck in der Zuleitung zum engen Teil der Venturidüse. Damit entsteht ein Differenzdruck, der zum Ansaugen von Gasen aus dem Resonanzraum heraus benutzt wird.

In der Erfindung ist die Venturidüse von einem Hohlraum umschlossen, der eine erste Öffnung zum Abtransport des aus der Gasauslassöffnung des Messfühlers austretenden Gasstroms und eine zweite Öffnung zum Einlass eines zusätzlichen Sauggasstroms zum Umströmen der Venturidüse in Richtung der ersten Öffnung umfasst, damit ein durch die zweite Öffnung hindurchtretender Sauggasstrom mittels eines an der Venturidüse zusätzlich erzeugten Unterdrucks den Gasstrom durch den Messfühler hindurch erzeugen kann. Mit dieser so ausgeführten Saugeinrichtung lässt sich ein besonders hoher Gasstrom durch den Resonanzraum erzeugen, was zu einer besonders hohen Intensität der zu messenden Frequenz und damit zu einer hohen Detektierbarkeit der Frequenz führt.

In einer Ausführungsform umfasst die Temperaturvorrichtung des Weiteren ein schaltbares Ventil, das dazu ausgestaltet ist, auf ein Schaltsignal hin die erste Öffnung des Hohlraums zumindest für ein Zeitintervall, vorzugsweise ein einstellbares Zeitintervall, zu verschließen oder zu öffnen. Durch die Möglichkeit, zu gegebenen Zeitpunkten für ein bestimmtes Zeitintervall den Gasstrom von der Gaseinlassöffnung zur Gasauslassöffnung zu unterbinden und stattdessen den Sauggasstrom in umgekehrter Richtung durch den Messfühler zur Gaseinlassöffnung hin zu richten, kann der Messfühler von Ruß- oder Staubpartikeln oder anderen Verunreinigungen befreit (freigeblasen) werden, so dass die erfindungsgemäße Temperurmessvorrichtung weiterhin mit hoher Präzision und einer langen wartungsfreien Betriebszeit verwendet werden kann und somit eine besonders robuste Messvorrichtung darstellt.

In einer Ausführungsform ist zumindest der Messfühler vollständig aus einem bei der zu erwartenden Gastemperatur temperaturbeständigen und wärmeisolierenden Material gefertigt. Für niedrigere beziehungsweise moderate Temperaturen oder nicht aggressive Medien kann der Messfühler aus Metall oder Kunststoff gefertigt sein. Bei der Verwendung von Metallen muss sichergestellt sein, dass der Ausdehnungskoeffizient des Materials im Betrieb nicht zu einer signifikanten Längenveränderung des Resonators führt, da sich damit die Eigenfrequenz des Resonanzraums und entsprechend die Messgenauigkeit verändert. Kunststoffmaterialien haben den Vorteil, dass Messfühler aus einem Kunststoffmaterial präzise und einfach mittels Spritzgussverfahren hergestellt werden können und je nach Wahl des Kunststoffs einen sehr geringen Ausdehnungskoeffizienten zeigen. Kunststoffmaterialien können somit einfach und gut für erfindungsgemäße Temperaturmessvorrichtungen verwendet werden, sofern die zu messenden Gastemperaturen nicht höher als die Temperatur sind, bei denen der verwendete Kunststoff weich wird oder sich zu stark ausdehnt. Für die jeweiligen Kunststoffklassen sind dem Fachmann die Temperaturen bekannt, ab denen der jeweilige Kunststoff zu weich wird, so dass er sich mechanisch verziehen könnte oder gar schmilzt.

In einer vorteilhaften Ausführungsform ist zumindest der Messfühler vollständig aus einem keramischen Material gefertigt. Keramische Materialien sind besonders für hohe Gastemperaturen geeignet, da sie eine geringe oder nahezu keine Wärmeausdehnung und daher entsprechend nahezu keine Verschiebung der Eigenfrequenz des Resonanzraums während des Betriebs des Messfühlers zeigen. Zudem sind Keramiken chemisch sehr stabil und kontaminieren das Gas nicht. Geeignete Keramiken sind beispielsweise Al₂O₃ (Aluminiumoxid), ZrO₂ (Zirkoniumoxid) oder andere feuerfeste Keramiken.

In einer Ausführungsform besitzt das Material des Messfühlers eine geeignete Wanddicke größer einer Minimalwanddicke, die so bemessen ist, dass eine eventuell am Ort der Temperaturmessung vorhandene Strahlungswärme den Gasstrom im Messfühler zumindest während einer für die Temperaturmessung benötigten Messzeit nicht erwärmen kann. Eine gemessene Temperatur kann eine Überlagerung aus Gastemperatur und Strahlungswärme am Messfühler sein. Diese Strahlungswärme könnte das Gas im Inneren des Messfühlers auf eine Temperatur erhitzen, die oberhalb der eigentlichen zu messenden Gastemperatur liegt, so dass dadurch die Messung verfälscht würde. Gerade keramische Materialien mit einem sehr geringen Wärmeleitkoeffizient schirmen Strahlungswärme effektiv vom Inneren des Messfühlers ab, so dass die eigentliche Gastemperatur sehr präzise gemessen werden kann. Keramische Messfühler mit einer Wanddicke von wenigen Millimetern sind ausreichend zum Vermeiden eines Einflusses der Strahlungswärme auf die gemessene Gastemperatur.

In einer Ausführungsform umfasst die Temperaturmessvorrichtung ein beidseitig offenes Rohr, an dessen einen Ende der Messfühler innerhalb des Rohres befestigt ist und das Rohr zur Positionierung des Messfühlers an der Messposition im Gas verwendet wird, an der die Gastemperatur gemessen werden soll. Hiermit wird die Positionierung des Messfühlers an den gewünschten Positionen vereinfacht und kann je nach Rohrlänge auch weit entfernte Messpositionen erreichen. Vorzugsweise ist das Rohr dabei aus demselben Material wie der Messfühler gefertigt, damit diese leicht im Rohr befestigt werden kann, beispielsweise mit entsprechendem Keramikzement und beide Komponenten zudem die gleichen mechanischen und physikalischen Eigenschaften ausweisen. Die erfindungsgemäße Temperaturmessvorrichtung gemäß einer oder mehreren der voranstehend beschriebenen Ausführungsformen ist in der Lage, die Gastemperatur eines Gases mindestens im Bereich zwischen 0 - 900°C, bei der Verwendung entsprechend angepasster Resonanzräume und Keramiken als Messfühlermaterial auch deutlich höhere Temperaturen, innerhalb von 500ms bis 1000ms mit hoher Präzision zu messen. Der Messfehler für die Gastemperatur liegt dabei unter 3° C. Diese Messgenauigkeit wird unter anderem durch die Vermeidung der Einflusses der Strahlungswärme auf das Messergebnis erzielt. Die Temperaturmessvorrichtung kann für eine Verbesserung der Prozessführung in den Anlagen, in denen die Gastemperatur gemessen wird, dabei mittels Standardschnittstellen an eine Anlagensteuerung zur Übermittlung der berechneten Gastemperatur angeschlossen werden. Damit können Anlagesteuerungen auf die mit der erfindungsgemäßen Temperaturmessvorrichtung gemessene Gastemperatur mit Reaktionszeiten von unter 1s reagieren. Die erfindungsgemäße Temperaturmessvorrichtung ist somit eine äußerst robuste Vorrichtung, mit der sich eine Gastemperatur direkt, lokal, präzise und reproduzierbar messen lässt und die Vorrichtung zudem eine besonders lange Lebensdauer besitzt.
Die Erfindung betrifft des Weiteren ein Verfahren zur Bestimmung von lokalen Temperaturen gemäß Anspruch 13.

In der Erfindung umfasst das Verfahren den weiteren Schritt des Erzeugens des Gasstroms durch den Messfühler hindurch mittels einer hinter der Gasauslassöffnung angeordneten und mit der Gasauslassöffnung verbundenen Saugeinheit zum Ansaugen des Gasstroms.

Für das erfindungsgemäße Verfahren ergeben sich die gleichen Vorteile wie voranstehend für die erfindungsgemäße Temperaturmessvorrichtung beschrieben. Die Erfindung betrifft des Weiteren eine Verwendung einer erfindungsgemäßen Temperaturmessvorrichtung zur Messung von Gastemperaturen in Verbrennungsöfen, Abgasleitungen, Heizungsanlagen, verfahrenstechnischen Anlagen, chemischen Anlagen, Schornsteinen oder in Abgasanlagenanlagen eines Verbrennungsmotors in Kraftfahrzeugen. Hierbei kann das Material, aus dem zumindest der Messfühler gefertigt ist, an die jeweiligen Anwendungsgebiete angepasst sein.

### Kurze Beschreibung der Abbildungen

Diese und andere Aspekte der Erfindung werden im Detail in den Abbildungen wie folgt gezeigt:
- Fig.1:: schematische Darstellung der Verwendung einer erfindungsgemäßen Temperaturmessvorrichtung in einem Verbrennungsofen;
- Fig.2:: seitlicher Schnitt durch eine Ausführungsform des Messfühlers mit einer Pfeife als akustischer Resonator;
- Fig.3:: seitlicher Schnitt durch eine andere Ausführungsform des Messfühlers mit einem Wellenleiter mit gewelltem Profil als akustischer Resonator;
- Fig.4:: schematische Darstellung einer Temperaturmessvorrichtung mit Saugeinheit und (a) schaltbarem Ventil in geöffneter Stellung zum Durchlass des Gasstroms aus dem Messfühler, und (b) schaltbarem Ventil in verschlossener Stellung zum Reinigen des Messfühlers;
- Fig.5:: eine Ausführungsform der erfindungsgemäßen Temperaturmessvorrichtung mit Messfühler angeordnet in einem Rohr;
- Fig.6:: eine Ausführungsform des erfindungsgemäßen Verfahrens;
- Fig.7:: eine weitere Ausführungsform des erfindungsgemäßen Verfahrens.

### Detaillierte Beschreibung der Ausführungsbeispiele

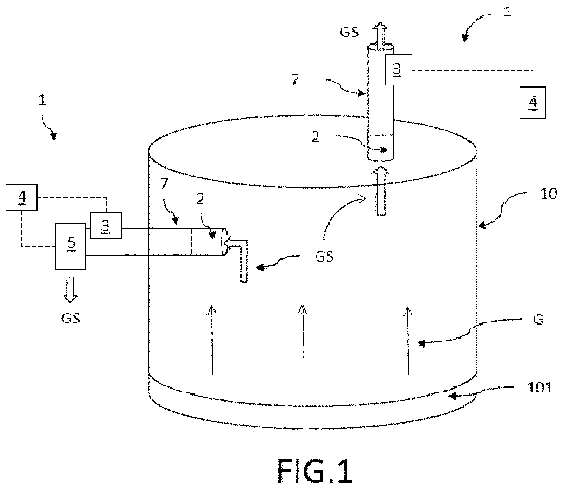

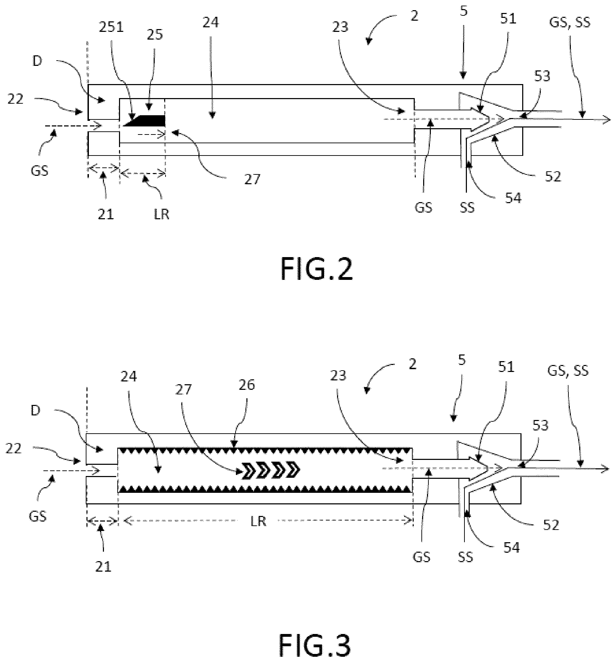

Fig.1 zeigt beispielhaft eine schematische Darstellung der Verwendung zweier erfindungsgemäßer Temperaturmessvorrichtungen 1 in einem Verbrennungsofen 10 zur Bestimmung der lokalen Temperaturen in dem Gas G an zwei unterschiedlichen Messpositionen. Dieselbe Messung könnte alternativ auch mit ein und derselben Temperaturmessvorrichtung 1 durchgeführt werden, indem diese mit einem Messfühler 2, hier ein stabförmiger Messfühler, mit der Fühlerspitze 21 (siehe dazu Figuren 2 und 3) nacheinander an den beiden gewünschten Messpositionen im Gas G positioniert wird. Der Messfühler 2 ist so ausgestaltet ist, dass mittels eines Gasstroms GS durch einen Resonanzraum und einen akustischen Resonator hindurch eine stehende akustische Welle mit einer für die Gastemperatur charakteristischen Frequenz angeregt wird, die mit einem akustischen Frequenzaufnehmer 3 aufgezeichnet und von einer mit dem Frequenzaufnehmer 3 verbundenen Auswerteeinheit 4 zu einer gemessenen Gastemperatur GT aus der aufgezeichneten Frequenz AF berechnet wird. Beispielsweise kann der Frequenzaufnehmer 3 als Mikrofon 3 ausgeführt sein, das in Richtung des Gasstroms GS gesehen hinter der Gasauslassöffnung 23 (siehe dazu Figuren 2 und 3) außerhalb des Gasstroms GS und des Verbrennungsofens 10 ohne direkten Kontakt zum Gas G angeordnet ist. Dadurch kann das Mikrofon 3 nicht durch eventuelle heiße Gase beschädigt werden.

Die notwendige Datenverbindung zwischen Frequenzaufnehmer 3 und Auswerteeinheit 4 kann vom Fachmann geeignet gewählt werden, beispielsweise in Form eines Datenkabels oder kabellos mit den dafür geeigneten Mitteln. Die Temperaturmessvorrichtung 1 umfasst in dieser Ausführungsform ein beidseitig offenes Rohr 7, an dessen dem Gas zugewandten Ende der Messfühler 2 innerhalb des Rohres 7 befestigt ist und das Rohr 7 zur Positionierung des Messfühlers 2 an der Messposition im Gas G verwendet wird, an der die Gastemperatur GT gemessen werden soll. Der für die Anregung der stehenden Welle benötigte Gasstrom GS wird bei dem parallel zum aufwärts strömenden Gas G (durch Pfeil angedeutet) angeordneten Rohr 7 durch das Gas G selbst erzeugt, indem dieses vom heißen Bereich 101 des Verbrennungsofens 10, beispielsweise eine offene Flamme im Verbrennungsofen 10, aufsteigt, so dass die Temperaturmessvorrichtung 1 keine zusätzliche Komponente zur Erzeugung eines Gasstroms umfassen muss. Die Temperaturessvorrichtung 1 mit waagerecht positionierten Rohr 7 umfasst stattdessen eine Saugeinheit 5 zur Erzeugung des Gasstroms GS durch den Messfühler 2. Bei Gasen, die entweder mit ungünstiger Strömungsrichtung am Messfühler 2 vorbeiströmen oder keine eigene Bewegung zeigen, muss der für die Temperaturmessung benötigte Gasstrom GS durch den Messfühler 2 hindurch von einer dazu vorgesehenen Komponente der Temperaturmessvorrichtung 1, hier die Saugeinheit 5, selbst erzeugt werden. Der Gasstrom GS tritt nach erfolgter Temperaturmessung in beiden Ausführungsformen am anderen Ende des Rohrs 7 oder der Saugeinheit 5 wieder aus der Temperaturmessvorrichtung 1 aus. Die erfindungsgemäße Temperaturmessvorrichtung 1 kann in anderen Anwendungen aber auch für die Gastemperaturmessung in Abgasleitungen, Heizungsanlagen, verfahrenstechnischen Anlagen, chemischen Anlagen, Schornsteinen oder in Abgasanlagenanlagen eines Verbrennungsmotors in Kraftfahrzeugen verwendet werden.

Fig.2 zeigt einen seitlichen Schnitt durch eine Ausführungsform des Messfühlers 2 mit einer Pfeife 25 als akustischer Resonator 25. Der Messfühler 2 umfasst eine Fühlerspitze 21 zur Positionierung der Fühlerspitze 21 an der gewünschten Messposition im Gas G und ist so ausgestaltet, dass der Messfühler 2 von einem Gasstrom GS des zu messenden Gases G durch eine Gaseinlassöffnung 22 im Bereich der Fühlerspitze 21 zu einer Gasauslassöffnung 23 am entgegengesetzten Ende des Messfühlers 2 durchströmt werden kann. Zwischen Gaseinlassöffnung 22 und Gasauslassöffnung 23 ist ein vom Gasstrom GS durchströmter und zur Gaseinlassöffnung 22 und Gasauslassöffnung 23 offener zylinderförmiger Resonanzraum 24 angeordnet, wobei hier die Länge des Resonanzraums 24 größer als die Resonanzlänge LR ist. In den Nähe zur Gaseinlassöffnung 22 ein akustischer Resonator in Form einer Pfeife 25 im Resonanzraum 24 angeordnet. Die Pfeife 25 bezeichnet hier nur das tonerzeugende Element, das von einem Resonanzvolumen mit einer Resonanzlänge LR umgeben ist, in dem die Gassäule eine stehende akustische Welle 27 mit einer Resonanzlänge LR ausbildet (angedeutet durch den gestrichelten Pfeil unterhalb der Pfeife 25). Eine Pfeife als Tonerzeuger umfasst eine Schneidkante 251, auf die der Gasstrom GS nach Durchtritt durch die Gaseinlassöffnung 22 gezielt trifft. Die Elastizität des Gases im Resonanzvolumen um die Pfeife 25 herum bewirkt, dass der Gasstrom GS aus dem Resonanzvolumen hinter der Pfeife 25 heraus und wieder hineinschwingt. Dieser Effekt tritt für Gase G jeglicher Zusammensetzung auf. In der erfindungsgemäßen Temperaturvorrichtung bildet der Resonanzraum 24 durch die auf beiden Seiten des Resonanzraums 24 vorhandenen Öffnungen, Gaseinlassöffnung 22 und Gasauslassöffnung 23, einen offenen Tonerzeuger. Dadurch klingen die erzeugten Töne höher als beispielsweise bei einem Resonanzraum mit geschlossenem der Pfeife gegenüberliegendem Ende. Die Frequenz und Klangfarbe des mittels Pfeife 25 erzeugten Tons hängen vor allem von Größe und Form des akustischen Resonators und des Resonanzraumes 24 (Verengung des Resonanzvolumens um die Pfeife herum) ab, daneben aber auch von der Schärfe der Schneidekante 251 und von Winkel, Dicke und Stärke des Gasstroms GS auf die Schneidkante 251. Die Pfeife 25 kann zwischen einigen Millimetern bis zu Zentimetern lang sein, wobei der Winkel der Schneidkante 251 bei ca. 20° C liegen kann. In anderen Anwendungen kann der Winkel auch anders gewählt werden. Der Resonanzraum 24 umschließt in dieser Ausführungsform sowohl das Resonanzvolumen mit Resonanzlänge LR und den akustischen Resonator 25 und den Bereich in Gastromrichtung gesehen hinter dem akustischen Resonators 25. Die hier gezeigte Temperaturmessvorrichtung 1 umfasst des Weiteren eine in Richtung des Gasstroms GS gesehen direkt hinter der Gasauslassöffnung 23 angeordnet und mit der Gasauslassöffnung 23 verbundene Saugeinheit 5, die einen Gasstroms GS durch den Messfühler 2 hindurch erzeugt. Die Saugeinheit 5 umfasst dazu eine Venturidüse 51, die von einem Hohlraum 52 umschlossen ist. Die gezeigte dreieckige Form des Hohlraums 52 ist hier nur beispielhaft angegeben und kann je nach Ausführungsform auch anders geformt sein. Der Hohlraum 52 hat eine erste Öffnung 53 zum Abtransport des aus der Gasauslassöffnung 23 des Messfühlers 2 austretenden Gasstroms GS (gestrichelt dargestellt) und eine zweite Öffnung 54, durch die ein zusätzlicher Sauggasstrom SS (durchgezogener Pfeil) zum Umströmen der Venturidüse 51 in Richtung der ersten Öffnung 53 eingelassen wird. Der Saugstrom SS kann dabei einem externen Gasreservoir entspringen, beispielsweise einer an die zweite Öffnung mittels einer geeigneten Gasleitung angeschlossenen Gasflasche. Der durch die zweite Öffnung 54 hindurchtretende Sauggasstrom SS erzeugt einen zusätzlichen Unterdrucks an der Venturidüse 51 und sorgt dafür, dass der Gasstrom GS besonders stark durch den Messfühler 2 hindurch strömt. Die Stärke des Gasstroms GS kann durch Variation der Stärke des Saugstroms SS eingestellt werden. Saugstrom SS und Gasstrom GS treten dann gemeinsam aus der ersten Öffnung 53 heraus.

Fig.3 zeigt einen seitlichen Schnitt durch eine andere Ausführungsform des Messfühlers 2 mit einem Wellenleiter 26 mit gewelltem Profil als akustischer Resonator 26. Hier entspricht die Resonanzlänge LR der Länge des Resonanzraums 24. Für alle weiteren Merkmale mit Ausnahme der Ausgestaltung des Resonanzraums 24 wird auf Figur 2 verwiesen. Hierbei besitzt der Resonanzraum 24 an der Wandung parallel zur Richtung des Gasstroms GS im Messfühler 2 eine regelmäßige Struktur 26 an der dem Gasstrom GS zugewandten Oberfläche. Diese Strukturen 26 als akustischer Resonator können Wellblechform oder eine gezackte Form besitzen. Die Periodizität der Struktur 26 als die Entfernung zwischen benachbarten Tälern oder Höhen (oder Spitzen) ist für die Erzeugung der stehenden Welle 27 wesentlich. Ein solcher Resonator 26 ist robust und verkleinert nicht merklich den Querschnitt des Resonanzraums 24, da er an der Wand des Resonanzraums 24 und nicht, wie beispielsweise eine Pfeife 25, in Mitten des Gasstroms GS angeordnet ist. Somit ist dieser akustische Resonator 26 weniger anfällig gegen Verschmutzung.

Die in den Figuren 2 und 3 gezeigten akustischen Resonatoren 25, 26 sollten in Kombination mit der Resonanzlänge LR so ausgestaltet sein, dass bei den zu messenden Gastemperaturen GT die stehende Welle 27 in einem Frequenzbereich liegt, der mit einem Mikrofon 3 als akustischer Frequenzaufnehmer 3 aufgezeichnet AF werden kann. Vorzugsweise liegt der Frequenzbereich der stehenden Welle 27 in einem Frequenzbereich, in dem die Störgeräusche, die vom Prozess hervorgerufen werden, niedrig sind. Die in den Figuren 2 und 3 gezeigten Messfühler 2 sind vollständig aus einem bei der zu erwartenden Gastemperatur GT temperaturbeständigen und wärmeisolierenden Material, vorzugsweise ein keramisches Material, gefertigt. Das Material des Messfühlers 2 hat dabei eine geeignete Wanddicke D größer einer Minimalwanddicke, die so bemessen ist, dass eine eventuell am Ort der Temperaturmessung vorhandene Strahlungswärme den Gasstrom GS im Messfühler 2 zumindest während einer für die Temperaturmessung benötigten Messzeit nicht erwärmen kann. Bei keramischen Materialien mit sehr geringer Wärmeleitung können dafür wenige Millimeter Wanddicke D ausreichen.

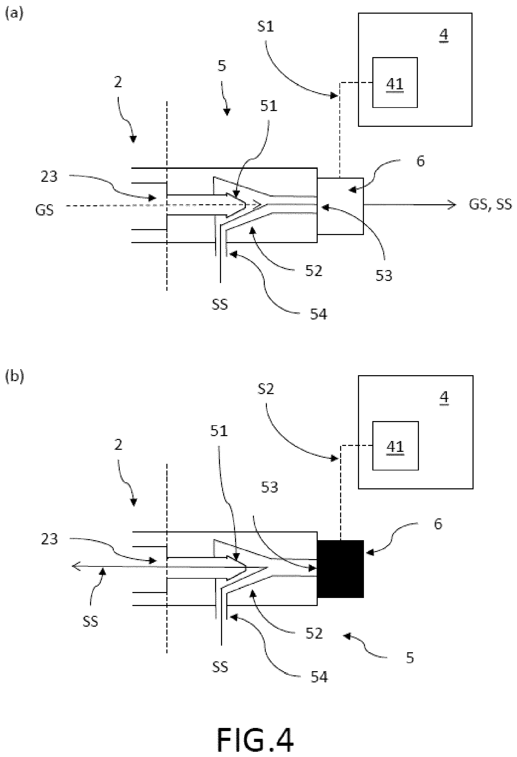

Fig.4 zeigt eine schematische Darstellung einer Temperaturmessvorrichtung 1 mit Saugeinheit 5 und (a) schaltbarem Ventil 6 in geöffneter Stellung zum Durchlass des Gasstroms GS durch den Messfühler 2, und (b) schaltbarem Ventil 6 in verschlossener Stellung zum Reinigen des Messfühlers 2. Während der Temperaturmessung ist das schaltbare Ventil 6 in offener Stellung, die zuvor durch ein entsprechendes Schaltsignal S1 ausgesendet von einer Kontroll- oder Signaleinheit 41 eingestellt wurde. Hier durchtritt der Gasstrom GS und Sauggasstrom SS die erste Öffnung 53 und das schalbare Ventil 6 nach außen. Auf ein Schaltsignal S2 hin kann die erste Öffnung 53 des Hohlraums 52 zumindest für ein Zeitintervall, vorzugsweise ein einstallbares Zeitintervall, durch das schaltbare Ventil 6 verschlossen werden. Der weiterhin anliegende Saugstrom SS lässt einerseits den Gasstrom GS zum Erliegen kommen und strömt anschließend selber in umgekehrter Richtung durch die Venturidüse 51, die Gasauslassöffnung 23 und den Resonanzraum 24 hindurch, um anschließend aus der Gaseinlassöffnung 22 hinauszutreten. Somit kann der in dieser speziellen Stellung des schaltbaren Ventils 6 umgekehrt zum Gasstrom GS verlaufende Saufgasstrom SS den Messfühler 2, zumindest aber dem Resonanzraum 24 von Partikel oder Teilchen reinigen, die durch den Sauggasstrom SS zur Gaseinlassöffnung 22 hinausgeblasen werden. In der hier gezeigten Ausführungsform ist die Kontroll- oder Signaleinheit 41 in der Auswerteeinheit (Steuereinheit) 4 angeordnet. In anderen Ausführungsformen kann der Fachmann auch eine andere Anordnung der Komponenten wählen.

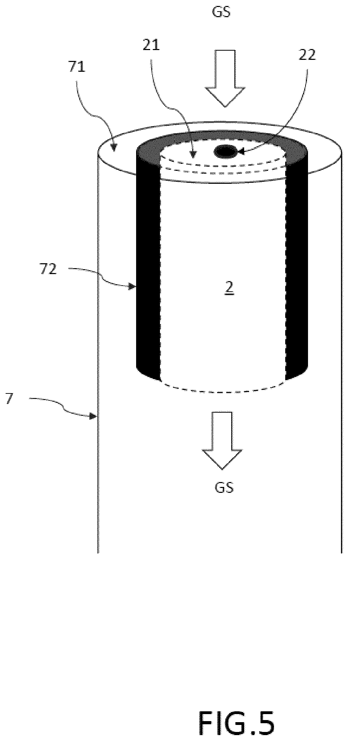

Fig.5 zeigt eine Ausführungsform der erfindungsgemäßen Temperaturmessvorrichtung 1 mit einem beidseitig offenen Rohr 7, an dessen einen Ende 71 der Messfühler 2 innerhalb des Rohres 7 mittels Keramikzement 72 als Material zur Befestigung des Messfühlers im Rohr so befestigt ist, dass die Fühlerspitze 21 bündig mit dem Rohrende 71 abschließt und die Gaseinlassöffnung 22 mittig in der Fühlerspitze 21 zum Einlassen des Gasstroms GS angeordnet ist. Das Rohr 7 kann besonders einfach zur Positionierung des Messfühlers 2 an der gewünschten Messposition P im Gas G verwendet werden, an der die Gastemperatur GT gemessen werden soll. In dieser Ausführungsform ist das Rohr 7 und der Messfühler 2 aus demselben keramischen Material für Hochtemperaturmessungen oder aus demselben Plastikmaterial für Messungen von moderaten Temperaturen gefertigt. Das Gas tritt dann aus dem Messfühler 2 am entgegengesetzten Ende aus und durchläuft das Rohr 7 nach außen, wo es an einer geeigneten Stelle ausgelassen wird.

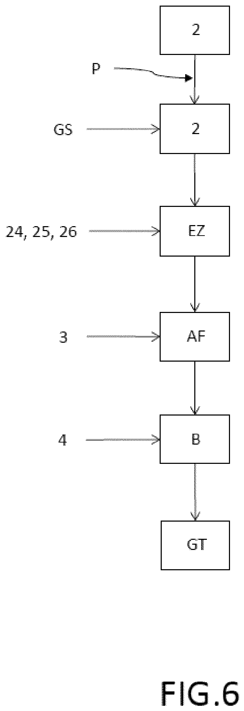

Fig.6 zeigt eine Ausführungsform des erfindungsgemäßen Verfahrens zur Bestimmung von lokalen Temperaturen in einem Gas G mit der erfindungsgemäßen Temperaturmessvorrichtung 1, umfassend die Schritte des Positionierens P eines stabförmigen Messfühler 2 mit seiner Fühlerspitze 21 an einer gewünschten Messposition im Gas G; des nachfolgenden Durchströmens des Messfühlers 2 mit einem Gasstrom GS des zu messenden Gases G durch eine Gaseinlassöffnung 22 im Bereich der Fühlerspitze 21 zu einer Gasauslassöffnung 23 am entgegengesetzten Ende des Messfühlers 2; des Erzeugens EZ einer vom Gasstrom GS angeregten stehenden akustischen Welle 27 mit einer für die Gastemperatur GT des von der Gaseinlassöffnung 22 zur Gasauslassöffnung 23 verlaufenden Gasstrom GS charakteristischen Frequenz in einem vom Gasstrom GS durchströmten zwischen Gaseinlassöffnung 22 und Gasauslassöffnung 23 angeordneten und zur Gaseinlassöffnung 22 und Gasauslassöffnung 23 offenen Resonanzraum 24 mittels eines zwischen Gaseinlassöffnung 22 und Resonanzraum 24 angeordneten akustischen Resonators 25, 26 als Tonerzeuger; des Aufzeichnens AF der Frequenz der stehenden akustischen Wellen 27 mittels eines akustischen Frequenzaufnehmers 3; und des Berechnens B der Gastemperatur GT aus der aufgezeichneten Frequenz AF mittels einer mit dem Frequenzaufnehmer 3 verbundenen Auswerteeinheit 4. Am Ende des Verfahrens wird die Gastemperatur auf geeignete Weise ausgegeben, beispielsweise durch Anzeige auf einem Anzeigemittel der Temperaturmessvorrichtung 1 oder durch Übermittlung an eine Steuereinheit der Gasanlage.

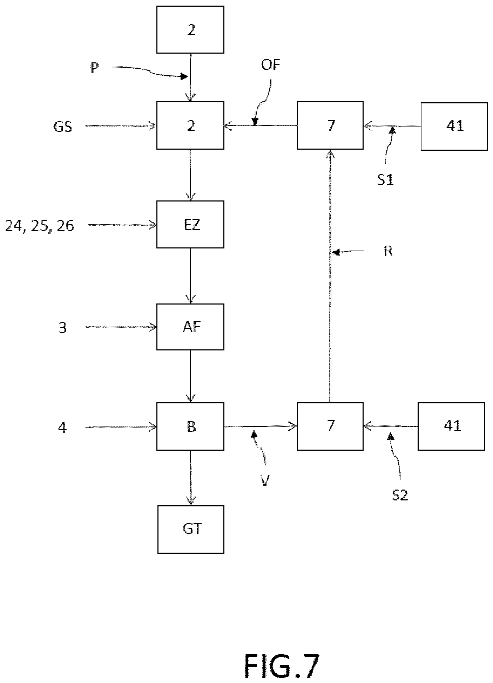

Fig.7 zeigt eine weitere Ausführungsform des erfindungsgemäßen Verfahrens. Hierbei werden zusätzlich zu den bereits in Figur 6 gezeigten Verfahrensschritten die weiteren Schritte des Reinigens R des Messfühlers 2 mittels Verschließen V eines hinter der Saugeinheit 5 schaltbaren Ventils 6 durchgeführt, wobei Saugeinheit 5 und Ventil 6 wie in Figur 5 gezeigt ausgeführt sind. Das schaltbare Ventil 6 ist dazu ausgestaltet, auf ein Schaltsignal S2 hin die erste Öffnung 53 des Hohlraums 52 zumindest für ein Zeitintervall, vorzugsweise ein einstallbares Zeitintervall, zu verschließen V, um so den weiter anliegenden Sauggasstrom SS nach Abbruch des Gasstroms GS in entgegengesetzte Richtung zum vorherigen Gasstrom GS durch den Messfühler 2 strömen zu lassen. Nach abgeschlossener Reinigung R wird das schaltbare Ventil 6 auf ein Schaltsignal S1 der Kontroll- oder Signaleinheit 41 hin wieder geöffnet, und der Sauggasstrom SS strömt wieder durch geeignete Form des Hohlraums 52 aus der ersten Öffnung 53 hinaus, was auch wieder zu einem Gasstrom GS durch den Messfühler beziehungsweise der Resonanzraum 24 führt. Nach Etablierung des Gasstroms GS kann erneut eine Temperaturmessung durchgeführt werden.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Liste der Bezugszeichen

- 1: Temperaturmessvorrichtung
- 10: Verbrennungsofen
- 101: heißer Bereich des Verbrennungsofens (beispielsweise offene Flamme im Verbrennungsofen)
- 2: Messfühler
- 21: Fühlerspitze
- 22: Gaseinlassöffnung
- 23: Gasauslassöffnung
- 24: Resonanzraum
- 25: akustischer Resonator als Pfeife
- 251: Schneidkante einer Pfeife als akustischer Resonator
- 26: akustischer Resonator als Wellenleiter mit gewelltem Profil
- 27: stehende akustische Welle
- 3: akustischer Frequenzaufnehmer, beispielsweise Mikrofon
- 4: Auswerteeinheit (Steuereinheit)
- 41: Kontrolleinheit, Signaleinheit
- 5: Saugeinheit
- 51: Venturidüse
- 52: Hohlraum der Saugeinheit
- 53: erste Öffnung im Hohlraum
- 54: zweite Öffnung im Hohlraum
- 6: schaltbares Ventil
- 7: beidseitig offenes Rohr
- 71: (vorderes) Ende des Rohres
- 72: Material zur Befestigung des Messfühlers im Rohr

- AF: Aufzeichnen der Frequenz der stehenden akustischen Welle (aufgezeichnete Frequenz)
- B: Berechnung der Gastemperatur aus der aufgezeichneten Frequenz
- D: Wanddicke des Materials des Messfühlers
- EZ: Erzeugen einer stehenden akustischen Welle
- G: Gas, dessen Temperatur gemessen werden soll
- GS: Gasstrom des Gases
- GT: Gastemperatur
- LR: Resonanzlänge im Resonanzraum
- OF: Öffnen des schaltbaren Ventils
- P: Positionieren des Messfühlers an der gewünschten Messposition
- R: Reinigen des Messfühlers
- S1: Schaltsignal zum Öffnen des schaltbaren Ventils
- S2: Schaltsignal zum Verschließen des schaltbaren Ventils
- SS: Sauggasstrom
- V: Verschließen des schaltbaren Ventils

## Patentansprüche

1. Eine Temperaturmessvorrichtung (1) zur Bestimmung von lokalen Temperaturen in einem Gas (G) mit einem Messfühler (2) mit einer Fühlerspitze (21) zur Positionierung der Fühlerspitze (21) an der gewünschten Messposition im Gas (G), wobei der Messfühler (2) so ausgestaltet ist, dass der Messfühler (2) von einem Gasstrom (GS) des zu messenden Gases (G) durch eine Gaseinlassöffnung (22) im Bereich der Fühlerspitze (21) zu einer Gasauslassöffnung (23) am entgegengesetzten Ende des Messfühlers (2) durchströmt werden kann und zwischen Gaseinlassöffnung (22) und Gasauslassöffnung (23) ein vom Gasstrom (GS) durchströmter und zur Gaseinlassöffnung (22) und Gasauslassöffnung (23) offener Resonanzraum (24) angeordnet ist, wobei im Resonanzraum (24) ein akustischer Resonator (25, 26) als Tonerzeuger zur Erzeugung (EZ) einer vom Gasstrom angeregten stehenden akustischen Welle (27) im Resonanzraum (24) mit einer für die Gastemperatur (GT) charakteristischen Frequenz angeordnet ist, mit einem akustischen Frequenzaufnehmer (3) zur Aufzeichnung (AF) der Frequenz der stehenden akustischen Wellen (27) und mit einer mit dem Frequenzaufnehmer (3) verbundenen Auswerteeinheit (4) zur Berechnung (B) der Gastemperatur (GT) aus der aufgezeichneten Frequenz (AF),
**dadurch gekennzeichnet,**
**dass** die Temperaturmessvorrichtung (1) des Weiteren eine mit der Gasauslassöffnung (23) verbundene Saugeinheit (5) umfassend eine Venturidüse (51) zur Erzeugung des Gasstroms (GS) durch den Messfühler (2) umfasst, wobei die Venturidüse (51) von einem Hohlraum (52) umschlossen ist, der eine erste Öffnung (53) zum Abtransport des aus der Gasauslassöffnung (23) des Messfühlers (2) austretenden Gasstroms (GS) und eine zweite Öffnung (54) zum Einlass eines zusätzlichen Sauggasstroms (SS) zum Umströmen der Venturidüse (51) in Richtung der ersten Öffnung (53) umfasst, damit ein durch die zweite Öffnung (54) hindurchtretender Sauggasstrom (SS) mittels eines an der Venturidüse (51) erzeugten Unterdrucks den Gasstrom (GS) durch den Messfühler (2) hindurch erzeugen kann.

2. Die Temperaturmessvorrichtung (1) nach Anspruch 1,
**dadurch gekennzeichnet,**
**dass** der akustische Resonator (25, 26) als Pfeife (25) oder Wellenleiter (26) mit gewelltem Profil ausgebildet ist.

3. Die Temperaturmessvorrichtung (1) nach Anspruch 2,
**dadurch gekennzeichnet,**
**dass** der akustische Resonator (25, 26) so ausgestaltet ist, dass bei den zu messenden Gastemperaturen (GT) die stehende Welle (27) in einem Frequenzbereich liegt, der mit einem Mikrofon (3) als akustischer Frequenzaufnehmer (3) aufgezeichnet (AF) werden kann.

4. Die Temperaturmessvorrichtung (1) nach Anspruch 3,
**dadurch gekennzeichnet,**
**dass** der Frequenzbereich der stehenden Welle (27) in einem Frequenzbereich liegt, in dem die Störgeräusche, die vom Prozess hervorgerufen werden, niedrig sind.

5. Die Temperaturmessvorrichtung (1) nach Anspruch 3 oder 4,
**dadurch gekennzeichnet,**
**dass** das Mikrofon (3) in Richtung des Gasstroms (GS) gesehen hinter der Gasauslassöffnung (23) angeordnet ist, vorzugweise ist das Mikrofon (3) zusätzlich außerhalb des Gasstroms (GS) ohne direkten Kontakt zum Gas (G) angeordnet.

6. Die Temperaturmessvorrichtung (1) nach einem der voranstehenden Ansprüche,
**dadurch gekennzeichnet,**
**dass** die Saugeinrichtung (5) in Richtung des Gasstroms (GS) gesehen direkt hinter der Gasauslassöffnung (23) angeordnet ist.

7. Die Temperaturmessvorrichtung (1) nach Anspruch 1,
**dadurch gekennzeichnet,**
**dass** die Temperaturvorrichtung (1) des Weiteren ein schaltbares Ventil (6) umfasst, das dazu ausgestaltet ist, auf ein Schaltsignal (S1, S2) hin die erste Öffnung (53) des Hohlraums (52) zumindest für ein Zeitintervall zu verschließen (V) oder zu öffnen (OF).

8. Die Temperaturmessvorrichtung (1) nach Anspruch 7,
**dadurch gekennzeichnet,**
**dass** das Zeitintervall ein einstallbares Zeitintervall ist.

9. Die Temperaturmessvorrichtung (1) nach einem der voranstehenden Ansprüche,
**dadurch gekennzeichnet,**
**dass** zumindest der Messfühler (2) vollständig aus einem bei der zu erwartenden Gastemperatur (GT) temperaturbeständigen und wärmeisolierenden Material, vorzugsweise ein keramisches Material, gefertigt ist.

10. Die Temperaturmessvorrichtung (1) nach Anspruch 9,
**dadurch gekennzeichnet,**
**dass** das Material des Messfühlers (2) eine geeignete Wanddicke (D) größer einer Minimalwanddicke besitzt, die so bemessen ist, dass eine eventuell am Ort der Temperaturmessung vorhandene Strahlungswärme den Gasstrom (GS) im Messfühler (2) zumindest während einer für die Temperaturmessung benötigten Messzeit nicht erwärmen kann.

11. Die Temperaturmessvorrichtung (1) nach einem der voranstehenden Ansprüche,
**dadurch gekennzeichnet,**
**dass** die Temperaturmessvorrichtung (1) ein beidseitig offenes Rohr (7) umfasst, an dessen einen Ende (71) der Messfühler (2) innerhalb des Rohres (7) befestigt ist und das Rohr (7) zur Positionierung des Messfühlers (2) an der Messposition (P) im Gas (G) verwendet wird, an der die Gastemperatur (GT) gemessen werden soll, vorzugsweise ist das Rohr (7) aus demselben Material wie der Messfühler (2) gefertigt.

12. Die Temperaturmessvorrichtung (1) nach einem der voranstehenden Ansprüche,
**dadurch gekennzeichnet,**
**dass** der Messfühler (2) ein stabförmiger Messfühler ist.

13. Ein Verfahren zur Bestimmung von lokalen Temperaturen in einem Gas (G) mit einer Temperaturmessvorrichtung (1) nach Anspruch 1, umfassend die Schritte
- Positionieren (P) eines stabförmigen Messfühler (2) mit seiner Fühlerspitze (21) an einer gewünschten Messposition im Gas (G);
- Erzeugung eines Gasstroms (GS) durch den Messfühler (2) hindurch mittels einer hinter der Gasauslassöffnung (23) angeordneten und mit der Gasauslassöffnung (23) verbundene Saugeinheit (5) zum Ansaugen des Gasstroms (GS), wobei die Saugeinheit eine Venturidüse (51) umfasst, die von einem Hohlraum (52) umschlossen ist, der eine erste Öffnung (53) zum Abtransport des aus der Gasauslassöffnung (23) des Messfühlers (2) austretenden Gasstroms (GS) und eine zweite Öffnung (54) zum Einlass eines zusätzlichen Sauggasstroms (SS) zum Umströmen der Venturidüse (51) in Richtung der ersten Öffnung (53) umfasst, damit ein durch die zweite Öffnung (54) hindurchtretender Sauggasstrom (SS) mittels eines an der Venturidüse (51) erzeugten Unterdrucks den Gasstrom (GS) durch den Messfühler (2) hindurch erzeugen kann;
- Durchströmen des Messfühlers (2) mit dem Gasstrom (GS) des zu messenden Gases (G) durch eine Gaseinlassöffnung (22) im Bereich der Fühlerspitze (21) zu einer Gasauslassöffnung (23) am entgegengesetzten Ende des Messfühlers (2),;
- Erzeugen (EZ) einer vom Gasstrom (GS) angeregten stehenden akustischen Welle (27) mit einer für die Gastemperatur (GT) des von der Gaseinlassöffnung (22) zur Gasauslassöffnung (23) verlaufenden Gasstrom (GS) charakteristischen Frequenz in einem vom Gasstrom (GS) durchströmten zwischen Gaseinlassöffnung (22) und Gasauslassöffnung (23) angeordneten und zur Gaseinlassöffnung (22) und Gasauslassöffnung (23) offenen Resonanzraum (24) mittels eines im Resonanzraum (24) angeordneten akustischen Resonators (25, 26) als Tonerzeuger;
- Aufzeichnen (AF) der Frequenz der stehenden akustischen Wellen (27) mittels eines akustischen Frequenzaufnehmers (3); und
- Berechnung (B) der Gastemperatur (GT) aus der aufgezeichneten Frequenz (AF) mittels einer mit dem Frequenzaufnehmer (3) verbundenen Auswerteeinheit (4).

14. Das Verfahren nach Anspruch 13, umfassend die weiteren Schritte des Reinigens (R) des Messfühlers (2) mittels Verschließen (V) eines hinter der Saugeinheit (5) angeordneten schaltbaren Ventils (6), wobei das schaltbare Ventil (6) auf ein Schaltsignal (S2) hin die erste Öffnung (53) des Hohlraums (52) zumindest für ein Zeitintervall, vorzugsweise ein einstallbares Zeitintervall, verschließt (V), um so den weiter anliegenden Sauggasstrom (SS) nach Abbruch des Gasstroms (GS) in entgegengesetzte Richtung zum vorherigen Gasstrom (GS) durch den Messfühler (2) strömen zu lassen.

15. Verwendung einer Temperaturmessvorrichtung (1) nach Anspruch 1 zur Messung von Gastemperaturen in Verbrennungsöfen (10), Abgasleitungen, Heizungsanlagen, verfahrenstechnischen Anlagen, chemischen Anlagen, Schornsteinen oder in Abgasanlagenanlagen eines Verbrennungsmotors in Kraftfahrzeugen.

## Claims

1. Temperature measuring device (1) for determining local temperatures in a gas (G) having a measuring sensor (2) with a sensor tip (21) for positioning the sensor tip (21) at the desired measuring position in the gas (G), whereby the measuring sensor (2) is designed appropriately such that a gas flow (GS) of the gas (G) to be measured can flow through the measuring sensor (2) through a gas inlet opening (22) in the area of the sensor tip (21) to a gas outlet opening (23) on the opposite end of the measuring sensor (2), and a resonance space (24), which is open with respect to gas inlet opening (22) and gas outlet opening (23) and has a gas flow (GS) flowing through it, is arranged between gas inlet opening (22) and gas outlet opening (23), whereby an acoustic resonator (25, 26) is arranged in the resonance space (24) as a sound producer for producing (EZ) a standing acoustic wave (27) in the resonance space (24) that is induced by the gas flow, with a frequency that is characteristic for the gas temperature (GT), with an acoustic frequency recorder (3) for recording (AF) the frequency of the standing acoustic waves (27), and with an analytical unit (4) that is connected to the frequency recorder (3) and is for calculating (B) the gas temperature (GT) from the recorded frequency (AF),
**characterised in that**
the temperature measuring device (1) further comprises a suction unit (5) that is connected to the gas outlet opening (23) and comprises a Venturi nozzle (51) for generating the gas flow (GS) passing through the measuring sensor (2), whereby the Venturi nozzle (51) is enclosed by a hollow space (52) that comprises a first opening (53) for discharging the gas flow (GS) exiting from the gas outlet opening (23) of the measuring sensor (2), and a second opening (54) for admitting an additional suction gas flow (SS) intended to flow about the Venturi nozzle (51) in the direction of the first opening (53) such that a suction gas flow (SS) passing through the second opening (54) can generate the gas flow (GS) passing through the measuring sensor (2) by means of a negative pressure being generated at the Venturi nozzle (51).

2. Temperature measuring device (1) according to claim 1,
**characterised in that**
the acoustic resonator (25, 26) is designed as a whistle (25) or waveguide (26) with a wavy profile.

3. Temperature measuring device (1) according to claim 2,
**characterised in that**
the acoustic resonator (25, 26) is designed appropriately such that, at the gas temperatures (GT) to be measured, the standing wave (27) is in a frequency range that can be recorded (AF) with a microphone (3) as acoustic frequency recorder (3).

4. Temperature measuring device (1) according to claim 3,
**characterised in that**
the frequency range of the standing wave (27) is in a frequency range, in which the background noise produced by the process is low.

5. Temperature measuring device (1) according to claim 3 or 4,
**characterised in that**
the microphone (3), as viewed in the direction of the gas flow (GS), is arranged downstream of the gas outlet opening (23), preferably the microphone (3) is arranged, in addition, outside of the gas flow (GS) without contacting the gas directly.

6. Temperature measuring device (1) according to any one of the preceding claims,
**characterised in that**
the suction facility (5) is arranged, as viewed in the direction of the gas flow (GS), directly downstream from the gas outlet opening (23).

7. Temperature measuring device (1) according to claim 1,
**characterised in that**
the temperature device (1) further comprises a switchable valve (6) that is designed to respond to a switching signal (S1, S2) by closing (V) or opening (OF) the first opening (53) of the hollow space (52), at least for a period of time.

8. Temperature measuring device (1) according to claim 7,
**characterised in that**
the period of time is a period of time that can be set.

9. Temperature measuring device (1) according to any one of the preceding claims,
**characterised in that**
at least the measuring sensor (2) is completely made from a material that is temperature-resistant and heat-insulating at the expected gas temperature (GT), preferably from a ceramic material.

10. Temperature measuring device (1) according to claim 9,
**characterised in that**
the material of the measuring sensor (2) has a suitable wall thickness (D) that is larger than a minimum wall thickness that is dimensioned appropriately such that radiant heat that may be present at the site of the temperature measurement cannot heat the gas flow (GS) in the measuring sensor (2), at least during a measuring time that is required for the temperature measurement.

11. Temperature measuring device (1) according to any one of the preceding claims,
**characterised in that**
the temperature measuring device (1) comprises a tube (7) that is open on both sides and has, on one of its ends (71), the measuring sensor (2) attached inside the tube (7), and **in that** the tube (7) is used for positioning the measuring sensor (2) at the measuring position (P) in the gas (G) at which the gas temperature (GT) is to be measured, preferably the tube (7) is made from the same material as the measuring sensor (2).

12. Temperature measuring device (1) according to any one of the preceding claims,
**characterised in that**
the measuring sensor (2) is a rod-shaped measuring sensor.

13. Method for the determination of local temperatures in a gas (G) with a temperature measuring device (1) according to claim 1, comprising the steps of
- positioning (P) a rod-shaped measuring sensor (2) with its sensor tip (21) at a desired measuring position in the gas (G);
- generating a gas flow (GS) passing through the measuring sensor (2) by means of a suction unit (5) for aspirating the gas flow (GS) that is arranged downstream from the gas outlet opening (23) and is connected to the gas outlet opening (23), whereby the suction unit comprises a Venturi nozzle (51) that is enclosed by a hollow space (52) that comprises a first opening (53) for discharging the gas flow (GS) exiting from the gas outlet opening (23) of the measuring sensor (2), and a second opening (54) for admitting an additional suction gas flow (SS) intended to flow about the Venturi nozzle (51) in the direction of the first opening (53) such that a suction gas flow (SS) passing through the second opening (54) can generate the gas flow (GS) passing through the measuring sensor (2) by means of a negative pressure being generated at the Venturi nozzle (51);
- passing the gas flow (GS) of the gas (G) to be measured through the measuring sensor (2) through a gas inlet opening (22) in the area of the sensor tip (21) to a gas outlet opening (23) on the opposite end of the measuring sensor (2);
generating (EZ) a standing acoustic wave (27), which is induced by the gas flow (GS) and has a characteristic frequency for the gas temperature (GT) of the gas flow (GS) passing from the gas inlet opening (22) to the gas outlet opening (23), in a resonance space (24), which is open with respect to gas inlet opening (22) and gas outlet opening (23) and has a gas flow (GS) flowing through it, and is arranged between gas inlet opening (22) and gas outlet opening (23), by means of an acoustic resonator (25, 26) that is arranged in the resonance space (24) as a sound producer;
- recording (AF) the frequency of the standing acoustic waves (27) by means of an acoustic frequency recorder (3); and
- calculating (B) the gas temperature (GT) from the recorded frequency (AF) by means of an analytical unit (4) that is connected to the frequency recorder (3).

14. Method according to claim 13, comprising the further steps of cleaning (R) the measuring sensor (2) by means of closing (V) a switchable valve (6) that is arranged downstream from the suction unit (5), whereby the switchable valve (6), in response to a switching signal (S2), closes (V) the first opening (53) of the hollow space (52), at least for a period of time, preferably for a period of time that can be set, in order to thus allow the still continuing suction gas flow (SS) to flow through the measuring sensor (2) in the opposite direction with respect to the previous gas flow (GS) after the gas flow (GS) ceases.

15. Use of a temperature measuring device (1) according to claim 1 for measuring gas temperatures in combustion furnaces (10), exhaust gas lines, heating plants, process engineering plants, chemical plants, chimneys or in exhaust gas units of a combustion motor in motor vehicles.

## Revendications

1. Dispositif de mesure de température (1) pour la détermination de températures locales dans un gaz (G) avec une sonde de mesure (2) avec une pointe de sonde (21) pour le positionnement de la pointe de sonde (21) à la position de mesure souhaitée dans le gaz (G), dans lequel la sonde de mesure (2) est configurée de sorte que la sonde de mesure (2) peut être parcourue par un courant gazeux (GS) du gaz à mesurer (G) à travers une ouverture d'entrée gazeuse (22) dans la région de la pointe de sonde (21) vers une ouverture de sortie gazeuse (23) à l'extrémité opposée de la sonde de mesure (2), et un espace de résonance (24) parcouru par le courant gazeux (GS) et ouvert vers l'ouverture d'entrée gazeuse (22) et l'ouverture de sortie gazeuse (23) est disposé entre l'ouverture d'entrée gazeuse (22) et l'ouverture de sortie gazeuse (23), dans lequel un résonateur acoustique (25, 26) est disposé dans l'espace de résonance (24) en tant que générateur de son pour la génération (EZ) d'une onde acoustique stationnaire (27) excitée par le courant gazeux dans l'espace de résonance (24) avec une fréquence caractéristique pour la température gazeuse (GT), avec un capteur de fréquence acoustique (3) pour l'enregistrement (AF) de la fréquence des ondes acoustiques stationnaires (27) et avec un module d'évaluation (4) connecté au capteur de fréquence (3) pour le calcul (B) de la température gazeuse (GT) à partir de la fréquence enregistrée (AF),
**caractérisé en ce**
**que** le dispositif de mesure de température (1) comprend en outre un module d'aspiration (5) connecté à l'ouverture de sortie gazeuse (23) comprenant un tube de Venturi (51) pour la génération du courant gazeux (GS) à travers la sonde de mesure (2), dans lequel le tube de Venturi (51) est entouré par un espace creux (52) qui comprend une première ouverture (53) pour l'évacuation du courant gazeux (GS) sortant de l'ouverture de sortie gazeuse (23) de la sonde de mesure (2) et une seconde ouverture (54) pour l'entrée d'un courant gazeux d'aspiration supplémentaire (SS) pour la circulation du tube de Venturi (51) en direction de la première ouverture (53) afin qu'un courant gazeux d'aspiration (SS) traversant la seconde ouverture (54) puisse générer le courant gazeux (GS) à travers la sonde de mesure (2) au moyen d'une dépression générée au niveau du tube de Venturi (51).

2. Dispositif de mesure de température (1) selon la revendication 1,
**caractérisé en ce**
**que** le résonateur acoustique (25, 26) est réalisé en tant qu'évent (25) ou guide d'ondes (26) avec un profil ondulé.

3. Dispositif de mesure de température (1) selon la revendication 2,
**caractérisé en ce**
**que** le résonateur acoustique (25, 26) est configuré de sorte que dans le cas des températures gazeuses à mesurer (GT), l'onde stationnaire (27) se situe dans une gamme de fréquences qui peut être enregistrée (AF) avec un microphone (3) en tant que capteur de fréquence acoustique (3).

4. Dispositif de mesure de température (1) selon la revendication 3,
**caractérisé en ce**
**que** la gamme de fréquences de l'onde stationnaire (27) se situe dans une gamme de fréquences dans laquelle les bruits parasites qui sont provoqués par le processus sont faibles.

5. Dispositif de mesure de température (1) selon la revendication 3 ou 4,
**caractérisé en ce**
**que** le microphone (3) est disposé derrière l'ouverture de sortie gazeuse (23), vu en direction du courant gazeux (GS), le microphone (3) est de préférence disposé en outre en dehors du courant gazeux (GS) sans contact direct au gaz (G).

6. Dispositif de mesure de température (1) selon une des revendications précédentes,
**caractérisé en ce**
**que** le dispositif d'aspiration (5) est disposé directement derrière l'ouverture de sortie gazeuse (23), vu en direction du courant gazeux (GS).

7. Dispositif de mesure de température (1) selon la revendication 1,
**caractérisé en ce**
**que** le dispositif de température (1) comprend en outre une soupape commutée (6) qui est configurée pour fermer (V) ou pour ouvrir (OF) la première ouverture (53) de l'espace creux (52) au moins pendant un intervalle de temps suite à un signal de commutation (S1, S2).

8. Dispositif de mesure de température (1) selon la revendication 7,
**caractérisé en ce**
**que** l'intervalle de temps est un intervalle de temps réglable.

9. Dispositif de mesure de température (1) selon une des revendications précédentes,
**caractérisé en ce**
**qu'**au moins la sonde de mesure (2) est entièrement fabriquée en un matériau résistant à chaud à la température gazeuse à attendre (GT) et isolant thermique, de préférence un matériau céramique.

10. Dispositif de mesure de température (1) selon la revendication 9,
**caractérisé en ce**
**que** le matériau de la sonde de mesure (2) possède une épaisseur de paroi appropriée (D) supérieure à une épaisseur de paroi minimale qui est mesurée de sorte qu'une chaleur rayonnante éventuellement présente au site de la mesure de température ne peut pas réchauffer le courant gazeux (GS) dans la sonde de mesure (2) au moins pendant une durée de mesure nécessaire pour la mesure de température.

11. Dispositif de mesure de température (1) selon une des revendications précédentes,
**caractérisé en ce**
**que** le dispositif de mesure de température (1) comprend un tube ouvert des deux côtés (7) à une extrémité (71) duquel la sonde de mesure (2) est fixée au sein du tube (7) et le tube (7) pour le positionnement de la sonde de mesure (2) est utilisé à la position de mesure (P) dans le gaz (G) à laquelle la température gazeuse (GT) doit être mesurée, le tube (7) est de préférence fabriqué en le même matériau que la sonde de mesure (2).

12. Dispositif de mesure de température (1) selon une des revendications précédentes,
**caractérisé en ce**
**que** la sonde de mesure (2) est une sonde de mesure en forme de barre.

13. Procédé de détermination de températures locales dans un gaz (G) avec un dispositif de mesure de température (1) selon la revendication 1, comprenant les étapes de
- positionnement (P) d'une sonde de mesure en forme de barre (2) avec sa pointe de sonde (21) à une position de mesure souhaitée dans le gaz (G) ;
- génération d'un courant gazeux (GS) à travers la sonde de mesure (2) au moyen d'un module d'aspiration (5) disposé derrière l'ouverture de sortie gazeuse (23) et connecté à l'ouverture de sortie gazeuse (23) pour l'aspiration du courant gazeux (GS), dans lequel le module d'aspiration comprend un tube de Venturi (51) qui est entouré par un espace creux (52) qui comprend une première ouverture (53) pour l'évacuation du courant gazeux (GS) sortant de l'ouverture de sortie gazeuse (23) de la sonde de mesure (2) et une seconde ouverture (54) pour l'entrée d'un courant gazeux d'aspiration supplémentaire (SS) pour la circulation du tube de Venturi (51) en direction de la première ouverture (53) afin qu'un courant gazeux d'aspiration (SS) traversant la seconde ouverture (54) puisse générer le courant gazeux (GS) à travers la sonde de mesure (2) au moyen d'une dépression générée au niveau du tube de Venturi (51) ;
- parcours de la sonde de mesure (2) avec le courant gazeux (GS) du gaz à mesurer (G) à travers une ouverture d'entrée gazeuse (22) dans la région de la pointe de sonde (21) vers une ouverture de sortie gazeuse (23) à l'extrémité opposée de la sonde de mesure (2) ;
- génération (EZ) d'une onde acoustique stationnaire (27) excitée par le courant gazeux (GS) avec une fréquence caractéristique pour la température gazeuse (GT) du courant gazeux (GS) s'étendant de l'ouverture d'entrée gazeuse (22) à l'ouverture de sortie gazeuse (23) dans un espace de résonance (24) parcouru par le courant gazeux (GS), disposé entre l'ouverture d'entrée gazeuse (22) et l'ouverture de sortie gazeuse (23), et ouvert vers l'ouverture d'entrée gazeuse (22) et l'ouverture de sortie gazeuse (23) au moyen d'un résonateur acoustique (25, 26) disposé dans l'espace de résonance (24) en tant que générateur de son ;
- enregistrement (AF) de la fréquence des ondes acoustiques stationnaires (27) au moyen d'un capteur de fréquence acoustique (3) ; et
- calcul (B) de la température gazeuse (GT) à partir de la fréquence enregistrée (AF) au moyen d'un module d'évaluation (4) connecté au capteur de fréquence (3).

14. Procédé selon la revendication 13, comprenant les étapes supplémentaires du nettoyage (R) de la sonde de mesure (2) au moyen de la fermeture (V) d'une soupape commutée (6) disposée derrière le module d'aspiration (5), dans lequel la soupape commutée (6) ferme (V) la première ouverture (53) de l'espace creux (52) au moins pendant un intervalle de temps, de préférence un intervalle de temps réglable, suite à un signal de commutation (S2) pour laisser ainsi s'écouler le courant gazeux d'aspiration adjacent plus avant (SS) après interruption du courant gazeux (GS) dans la direction opposée au courant gazeux précédent (GS) à travers la sonde de mesure (2).

15. Utilisation d'un dispositif de mesure de température (1) selon la revendication 1 pour la mesure de températures gazeuses dans des fours à combustion (10), conduites de gaz d'échappement, installations de chauffage, installations technologiques, installations chimiques, cheminées ou dans des installations de gaz d'échappement d'un moteur à combustion interne dans des véhicules automobiles.
